# EUROPEAN PATENT SPECIFICATION

(11) **EP 3 421 756 B1**
(45) Date of publication and mention of the grant of the patent: **01.09.2021**
(21) Application number: 17834485.9
(22) Date of filing: 27.07.2017
(51) Int. Cl.: F02B 1/12, F02B 37/04, F01N 3/033, F02B 33/34, F02B 39/04, F02B 39/02, F02B 39/10, F02D 23/00, F02M 26/06, B60K 5/04, F02B 67/10, F02B 37/14, B60K 13/04, F01N 3/08, F02D 41/00

(54) **INTAKE AND EXHAUST DEVICE FOR VEHICLE**
EINLASS- UND AUSLASSVORRICHTUNG FÜR FAHRZEUG
DISPOSITIF D'ADMISSION ET D'ÉCHAPPEMENT POUR VÉHICULE

(30) Priority: 27.07.2016 JP 2016147106
(43) Date of publication of application: 02.01.2019
(73) Proprietor: Mazda Motor Corporation, Aki-gun Hiroshima 730-8670 (JP)
(72) Inventor: HASEGAWA Hirokazu, Aki-gun Hiroshima 730-8670 (JP); KITABATAKE Keishi, Aki-gun Hiroshima 730-8670 (JP); KURAMASHI Taku, Aki-gun Hiroshima 730-8670 (JP); NISHIDA Ryotaro, Aki-gun Hiroshima 730-8670 (JP); WASADA Mitsunori, Aki-gun Hiroshima 730-8670 (JP); NAKAHIRA Takeshi, Aki-gun Hiroshima 730-8670 (JP); KOJIMA Yuji, Aki-gun Hiroshima 730-8670 (JP); TSUDA Amane, Aki-gun Hiroshima 730-8670 (JP)
(74) Representative: Behr, Wolfgang
(86) International application number: PCT/JP2017/027267
(87) International publication number: WO 2018/021483

(56) References cited:
- WO-A2-2006/136790
- FR-A1- 2 949 140
- JP-A- 2002 317 626
- JP-A- 2004 176 688
- JP-A- 2004 239 217
- JP-A- 2006 315 613
- JP-A- 2007 146 681
- JP-A- 2015 059 559
- JP-A- 2016 003 614
- US-A1- 2007 107 704
- US-A1- 2010 242 901
- US-A1- 2011 083 432
- US-A1- 2013 125 544

## Description

### Technical Field

The present invention relates to a vehicle engine comprising an intake and exhaust device, and more specifically relates to a vehicle engine comprising an intake and exhaust device which includes a supercharger and an exhaust purification device.

### Background Art

Typically, in a gasoline engine for a vehicle, when gasoline is burnt at a ratio close to a theoretical air fuel ratio, an amount of oxygen left in an exhaust gas, generated by the burning, becomes small. However, in a case where a gasoline particulate filter (GPF) for purifying an exhaust gas is provided downstream of the engine, oxygen is required for purifying the exhaust gas in the GPF, and hence the entire exhaust gas may not be purified in the GPF when the amount of oxygen in the exhaust gas is small. Therefore, for example as in the case of an engine described in Japanese Patent Laid-Open No. JP 2012-57519, it is conceivable that a turbo charger is provided for supercharging so as to perform lean-burn.

US 2010/242901 A1 shows a method for controlling an internal combustion engine system includes, when a desired torque is equal to or greater than a first torque, opening an exhaust valve and injecting pilot fuel into a combustion chamber at a first pressure before an exhaust top dead center in a cylinder cycle, opening an intake valve in the cylinder cycle after said injecting, and injecting main fuel in the cylinder cycle after said opening of said intake valve. The method further includes, when a desired torque is less than said first torque, opening said exhaust valve and injecting pilot fuel into the combustion chamber at a second pressure that is greater than the first pressure before an exhaust top dead center in the cylinder cycle, opening said intake valve in the cylinder cycle after said injecting, and injecting main fuel in the cylinder cycle after said opening of said intake valve.

### Summary of Invention

### Technical Problem

Meanwhile, for example, when an operation with favorable heat efficiency is performed by a compression self-ignition operation, the temperature of the exhaust gas may become relatively low. In a catalyst which is provided downstream of the engine for purification of the exhaust gas, an activation temperature range needs to be set in advance, but the range for the activation temperature, to which the catalyst needs to correspond, becomes wide when the temperature of the exhaust gas may be low, thus making it difficult to set the activation temperature range. Especially in the case of an engine using both the compression self-ignition operation and a spark ignition operation, since a temperature range for a possible exhaust gas becomes wide, for example, when the activation temperature range for the catalyst is set to be on the high temperature side, the catalyst becomes less likely to correspond to the exhaust gas with a low temperature at the time of the compression self-ignition operation.

It is an object of the present invention to provide a vehicle engine comprising an intake and exhaust device which is capable of ensuring an activation environment for a catalyst of an exhaust purification device while ensuring favorable burning and operation in an engine capable of conducting a compression self-ignition operation.

### Solution to Problem

This problem is solved by an engine according to claim 1. Preferred embodiments of the present invention are the subject matter of the dependent claims.

For achieving the above object, the vehicle engine according to the present invention comprises an intake and exhaust device which is capable to perform a compression self-ignition operation, the device including on an intake passage a supercharger driven by a force other than an exhaust gas, and an exhaust purification device disposed on an exhaust passage is disposed adjacent to an outer surface of the engine.

In the present invention as thus configured, since the intake and exhaust device for the vehicle engine includes the supercharger, an amount of air required for compression self-ignition is ensured, and an intake flow in a furnace increases to accelerate the burning. As a result, generation of a deposit is suppressed.

The exhaust purification device is adjacent to the outer surface of the engine and is thereby disposed near the engine. Hence an exhaust gas discharged from the engine passes through a shorter path and is instantly introduced into the exhaust purification device, therefore, a decrease in temperature of the exhaust gas is reduced and the exhaust gas with a relatively high temperature is introduced into the exhaust purification device. Therefore, for example, even when an exhaust gas, generated in the case of burning by compression self-ignition, has a relatively low temperature, the supply of the exhaust gas in excessively low temperature to the exhaust purification device is avoided, therefore, the exhaust gas is favorably purified by the catalyst and the like of the exhaust purification device. Further, the above configuration facilitates the setting of the activation temperature range for the catalyst even when, for example, the catalyst is in use for the exhaust purification device in the vehicle engine using both the compression self-ignition operation and the spark ignition operation.

With the supercharger being driven by a force other than the exhaust gas, the supercharger is prevented from taking energy out of the exhaust gas. This prevents a decrease in temperature before the exhaust gas reaches the exhaust purification device, and also thereby, an exhaust gas with a relatively high temperature is supplied to the exhaust purification device, thus leading to favorable purification of the exhaust gas.

In the present invention, the supercharger is preferably a "supercharger (mechanical supercharger)" driven by an output shaft of the engine, or an electric supercharger.

In the present invention as thus configured, since the supercharger is the "supercharger" driven by the output shaft of the engine or is the electric supercharger, the supercharger is prevented from taking the energy out of the exhaust gas as compared to the case of using a supercharger driven by a force of an exhaust gas, such as a turbo charger. This prevents a decrease in temperature of the exhaust gas before the exhaust gas reaches the exhaust purification device, which enables the supply of an exhaust gas with a relatively high temperature to the exhaust purification device, thus leading to favorable purification of the exhaust gas.

In the present invention, it is preferable that the intake and exhaust device is capable to perform a spark ignition operation, a turbo supercharger is provided upstream of the exhaust purification device on the exhaust passage, supercharging is performed by the turbo supercharger when the spark ignition operation is conducted, and supercharging be performed by the "supercharger" when the compression self-ignition operation is conducted.

In the present invention as thus configured, since it is configured such that the supercharging is performed by the turbo supercharger when the spark ignition operation is conducted, and the supercharging is performed by the "supercharger" when the compression self-ignition operation is conducted, at the time of the compression self-ignition operation, the temperature of the exhaust gas is prevented from deviating from the activation temperature range for a catalyst device, and at the time of spark ignition operation, especially at the time of a high-load operation, the energy of the exhaust gas is consumed by the drive of the turbo supercharger to prevent the temperature of the exhaust gas from deviating from the activation temperature range for the catalyst device.

In the present invention, it is preferable that the intake and exhaust device is capable to perform a spark ignition operation, a turbo supercharger is provided upstream of the exhaust purification device on the exhaust passage, supercharging is performed by the turbo supercharger when the spark ignition operation is conducted, and supercharging is performed by the electric supercharger when the compression self-ignition operation is conducted.

In the present invention as thus configured, since it is configured such that the supercharging is performed by the turbo supercharger when the spark ignition operation is conducted and the supercharging is performed by the electric supercharger when the compression self-ignition operation is conducted, at the time of the compression self-ignition operation, the temperature of the exhaust gas is prevented from deviating from the activation temperature range for a catalyst device, and at the time of spark ignition operation, especially at the time of a high-load operation, the energy of the exhaust gas is consumed by the drive of the turbo supercharger to prevent the temperature of the exhaust gas from deviating from the activation temperature range for the catalyst device.

In the present invention, it is preferable that the engine have an intake system disposed on a vehicle-front side and an exhaust system disposed on a vehicle-rear side, and the supercharger is disposed on the vehicle-front side of the engine.

In the present invention as thus configured, since the exhaust system is disposed on the vehicle-rear side of the engine, the exhaust purification device of the exhaust system is hidden by the engine when the vehicle travels, to prevent the exhaust purification device from being overcooled by the wind generated by traveling. This ensures a favorable activation environment for the catalyst of the exhaust purification device.

Further, since the intake system is disposed on the vehicle-front side of the engine and the supercharger is also disposed on the vehicle-front side, the intake system including the supercharger is collectively disposed on the vehicle-front side of the engine, thus leading to improvement in response to the supercharging.

In the present invention, it is preferable that the exhaust purification device includes a particulate filter part and an exhaust gas recirculation (EGR) gas leading part provided downstream of the particulate filter part, and the EGR gas leading part is connected to an upstream of the supercharger via an EGR gas passage.

In the present invention as thus configured, in the exhaust purification device, since the EGR gas leading part is provided downstream of the particulate filter part and the EGR gas leading part is connected to the upstream of the supercharger, an exhaust gas with its deposit reduced by the particulate filter part is supplied to the upstream of the supercharger, thereby suppressing adhesion of the deposit component to the inside of the supercharger, to suppress deterioration in supercharging efficiency.

In the present invention, it is preferable that the exhaust purification device is supported on the outer surface of the engine by a support part, and a weight part of the exhaust purification device is disposed extending in a direction away from the outer surface than the support part.

According to the present invention with such a configuration, the exhaust purification device is supported on the outer surface of the engine by the support part, and the weight part of the exhaust purification device is disposed extending in the direction away from the outer surface of the engine than the support part, therefore, the exhaust purification device vibrates to function as a dynamic damper during the operation of the engine. As a result, the vibration of the exhaust purification device reduces the vibration of the engine, which leads to reduction in vibration and noise of the vehicle.

### Brief Description of Drawings

[Figure 1] Figure 1 is a plan view of an intake and exhaust device for a vehicle according to a first embodiment of the present invention.
[Figure 2] Figure 2 is a side view of the intake and exhaust device for the vehicle according to the first embodiment of the present invention.
[Figure 3] Figure 3 is a side view of the intake and exhaust device for the vehicle according to the first embodiment of the present invention, with a part of the device broken.
[Figure 4] Figure 4 is a bottom view of the intake and exhaust device for the vehicle according to the first embodiment of the present invention.
[Figure 5] Figure 5 is a perspective view of the intake and exhaust device for the vehicle according to the first embodiment of the present invention.
[Figure 6] Figure 6 is an enlarged perspective view showing a part of an exhaust system device of the vehicle according to the first embodiment of the present invention.
[Figure 7] Figure 7 is a side view of an intake and exhaust device for a vehicle according to a second embodiment of the present invention.
[Figure 8] Figure 8 is a plan view of an intake and exhaust device for a vehicle according to a third embodiment of the present invention.
[Figure 9] Figure 9 is a partial enlarged perspective view showing an installation structure of an exhaust purification device according to a third embodiment of the present invention.
[Figure 10] Figure 10 is a side view of an intake and exhaust device for a vehicle engine according to the third embodiment of the present invention.
[Figure 11] Figure 11 is a partial enlarged sectional view showing an installation structure of an exhaust purification device according to the third embodiment of the present invention.
[Figure 12] Figure 12 is a side view showing the installation structure of the exhaust purification device according to the third embodiment of the present invention.
[Figure 13] Figure 13 is a bottom view showing the installation structure of the exhaust purification device according to the third embodiment of the present invention.

### Description of Embodiments

Hereinafter, preferred embodiments of the present invention will be described below with reference to the accompanying drawings. In a second embodiment and thereafter, similar constituents to in the first embodiment are provided with the same numerals as in the first embodiment and the description thereof will be simplified or omitted.

### [First Embodiment]

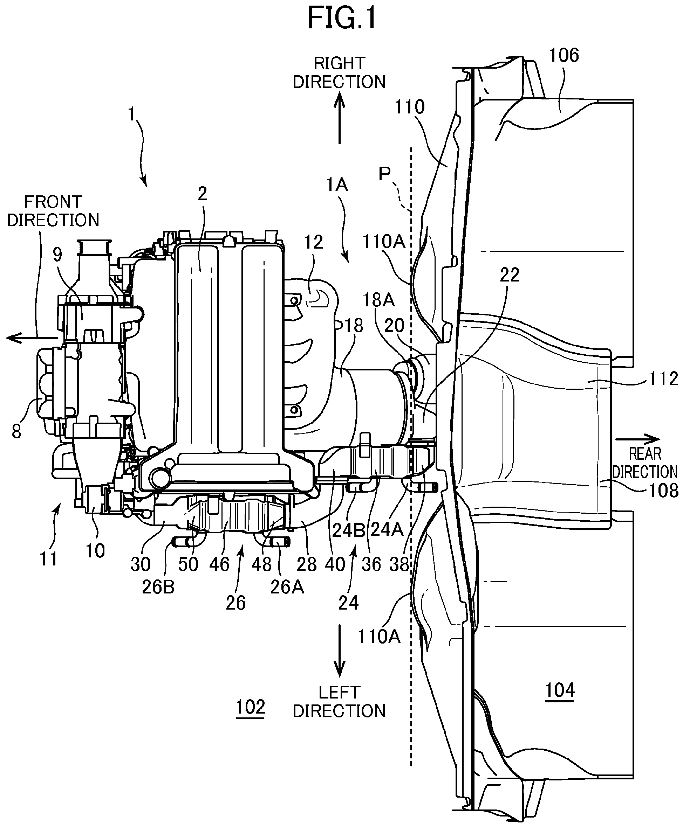

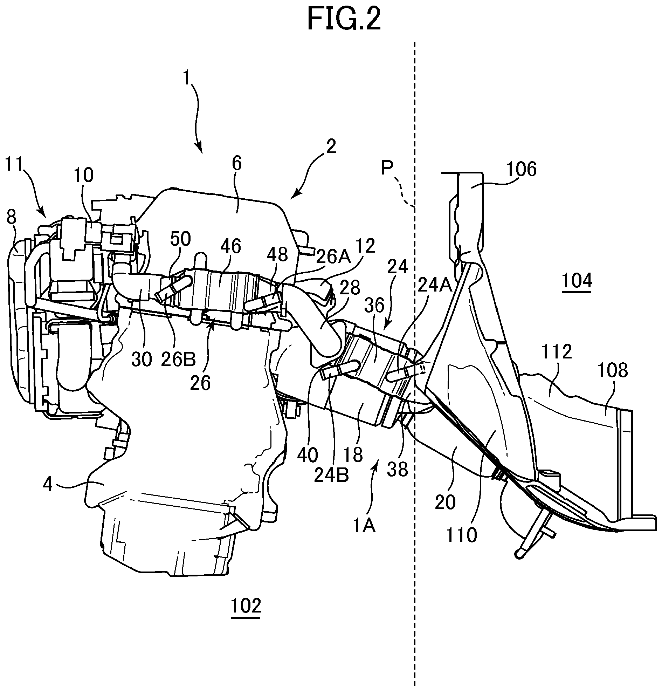

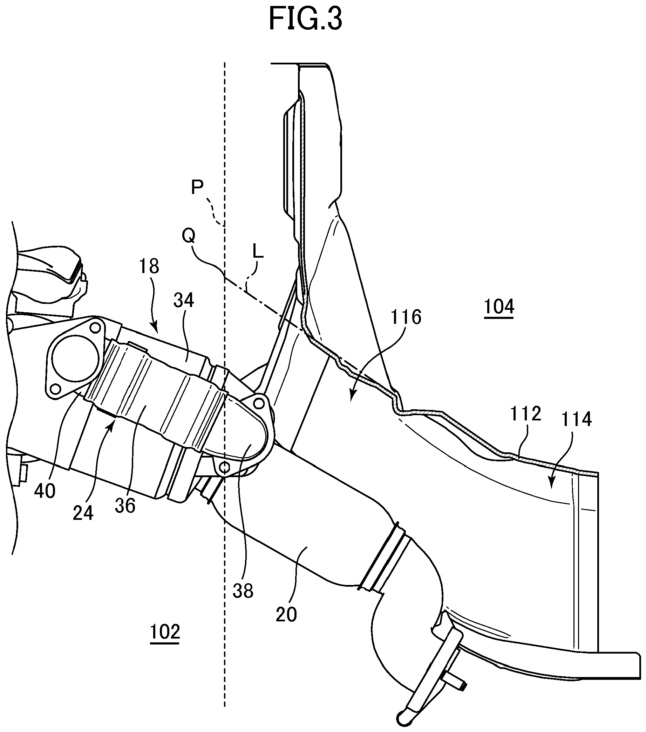

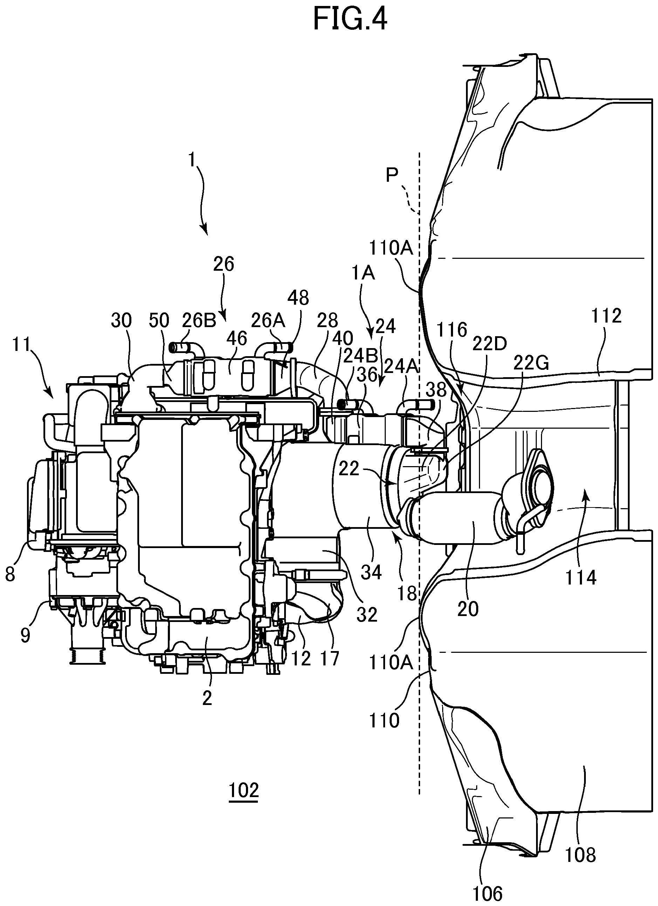

Figure 1 shows a plan view of an intake and exhaust device 1 for a vehicle according to a first embodiment of the present invention, Figure 2 shows a side view of the intake and exhaust device 1 for the vehicle according to the first embodiment of the present invention, Figure 3 shows a side view of the intake and exhaust device 1 for the vehicle according to the first embodiment of the present invention, with a part of the device broken, and Figure 4 shows a bottom view of the intake and exhaust device 1 for the vehicle according to the first embodiment of the present invention. Figure 1 is a view of the intake and intake and exhaust device 1 for the vehicle viewed from above, and in this figure, the horizontal direction indicates the longitudinal direction of the vehicle, the left side indicates the front direction of the vehicle, and the right side indicates the rear direction of the vehicle. Further, in this figure, the vertical direction indicates the vehicle-width direction of the vehicle, the upper side indicates the right direction of the vehicle, and the lower side indicates the left direction of the vehicle.

As shown in these Figures 1 to 4, the intake and exhaust device 1 for the vehicle according to the first embodiment of the present invention is applied to an engine 2 of a compression self-ignition system, such as a diesel engine or a homogeneous-charge compression ignition (HCCI) gasoline engine. The engine 2 includes a cylinder block 4 and a cylinder head 6 fitted to the upper portion of the cylinder block 4. In the present embodiment, inside an engine room 102, the engine 2 is disposed such that a crank shaft (not shown) is disposed along a vehicle-width direction of a vehicle 100, an intake system is disposed on the vehicle-front side of the engine 2, and an exhaust system is disposed on the vehicle-rear side of the engine 2, therefore, the engine 2 is thus a so-called front-intake rear-exhaust engine.

An intake manifold 8 integrated with a water-cooling inter cooler is fitted to the intake side of the engine 2, and a supercharger (mechanical supercharger) 9 is connected to the upstream side of the intake manifold 8 above the intake manifold 8, the supercharger 9 extending along the direction of the crank shaft of the engine 2, namely, along the vehicle-width direction of the vehicle 100 in the present embodiment. An EGR valve 10 is provided upstream of the supercharger 9. The EGR valve 10 is located to the left side of the center of the engine 2 in the vehicle-width direction, and more specifically, the EGR valve 10 is located at substantially the same position as the left-side side surface of the engine 2 in the vehicle-width direction. A pipe provided with the EGR valve 10, the supercharger 9, and a passage for intake which passes through the intake manifold 8 constitute an intake passage 11 in the present embodiment. In the present embodiment, the supercharger 9 is a supercharger of a system to obtain a driving force from the output shaft of the engine 2 via a belt.

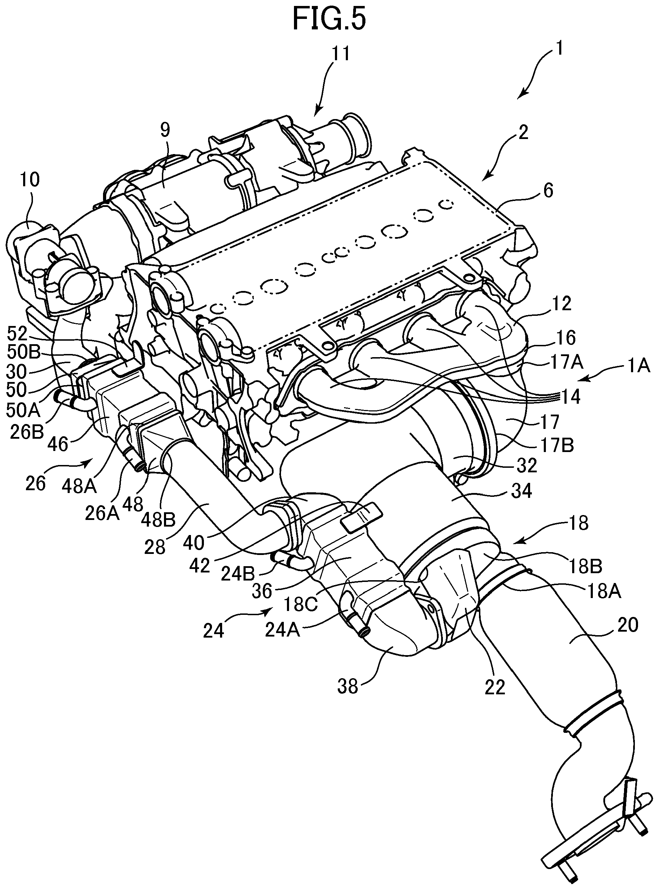

Figure 5 is a perspective view of the intake and exhaust device 1 for the vehicle according to the first embodiment of the present invention. As shown in this Figure 5 and aforementioned Figures 1 to 4, an exhaust manifold 12 is fitted to the discharge side of the engine 2. The exhaust manifold 12 includes a plurality of discharge pipes 14 connected to exhaust ports (not shown) for respective cylinders (four cylinders in the present embodiment) of the engine 2, and a mixing tube 16 where exhaust gases passing through the discharge pipes 14 converge. The discharge pipes 14 respectively extend from the exhaust ports of the cylinder block 4 toward the rear side of the vehicle 100, extend while being bent to the right in the vehicle-width direction on the downstream thereof, and are connected to the mixing tube 16 on the right side of the exhaust manifold 12 while sequentially converging with the adjacent discharge pipes 14 on substantially the same horizontal planes. With such a structure, when the exhaust manifold 12 is viewed from above, the mixing tube 16 is disposed on the right side of the exhaust manifold 12 in the vehicle-width direction and also disposed to the right of the center of the engine 2 in the vehicle-width direction. The mixing tube 16 is open on the lower surface while vertically extending in a short distance. An exhaust system device 1A of the present embodiment is connected to the mixing tube 16 via an exhaust purification device introduction passage 17.

The exhaust purification device introduction passage 17 has a gas inlet 17A and a gas outlet 17B. The gas inlet 17A is open upward and is coupled to an opening of the mixing tube 16. The gas outlet 17B is open in a direction substantially orthogonal to the gas inlet 17A, and specifically, the gas outlet 17B is open to the left in the vehicle-width direction.

The exhaust system device 1A includes: an exhaust purification device 18 for purifying an exhaust gas received from the exhaust manifold 12; a flexible pipe 20 connected to the exhaust purification device 18 so as to discharge the exhaust gas passing through the exhaust purification device 18 to the outside; an EGR gas leading part 22 for taking out a part of the exhaust gas passing through the exhaust purification device 18 as an EGR gas; a first EGR cooler 24 and a second EGR cooler 26 connected to the EGR gas leading part 22 and for cooling the EGR gas taken out of the exhaust purification device 18; a first EGR pipe 28 coupling the first EGR cooler 24 and the second EGR cooler 26; and a second EGR pipe 30 coupling the second EGR cooler 26 and the intake passage 11.

The exhaust purification device 18 has a substantially L-shape as viewed from the above of the vehicle 100 and includes an upstream-side portion 32 connected to the mixing tube 16 of the exhaust manifold 12 and a downstream-side portion 34 provided downstream of the upstream-side portion 32 and connected to the flexible pipe 20 and the EGR gas leading part 22.

The upstream-side portion 32 is a substantially cylindrical portion coupled to the gas outlet 17B of the exhaust purification device introduction passage 17 and is disposed with its central axis (longitudinal axis) along the vehicle-width direction. Hence the outer surface of the upstream-side portion 32 is disposed adjacent to the outer surface of the cylinder block 4 of the engine 2. A catalyst device is incorporated in the upstream-side portion 32.

The downstream-side portion 34 is a substantially cylindrical portion integrally formed in the upstream-side portion 32 and is disposed with its central axis (longitudinal axis) substantially at the right angle to the central axis of the upstream-side portion 32. Further, the central axis of the downstream-side portion 34 extends in the longitudinal direction of the vehicle 100, and is disposed such that the upstream end of the downstream-side portion 34 is located above the downstream end, namely, such that the central axis is inclined downwardly from the upstream end to the downstream end of the downstream-side portion 34. A gasoline particulate filter (GPF) is incorporated in the downstream-side portion 34.

With such a structure, the upstream-side portion 32 of the exhaust purification device 18 is disposed along the vehicle-width direction below the exhaust manifold 12, and the downstream-side portion 34 is disposed along the longitudinal direction of the vehicle 100 on the left to the center of the engine 2 in the vehicle-width direction.

The flexible pipe 20 is a cylindrical member connected to an exhaust outlet 18A formed at the downstream end of the downstream-side portion 34 of the exhaust purification device 18 and is formed of a material extendable and retractable or bendable to a certain extent. The flexible pipe 20 is coupled to the exhaust outlet 18A disposed on the right side in the vehicle-width direction and the lower side in the vertical direction on the circular end surface 18B at the downstream end of the downstream-side portion 34 of the exhaust purification device 18. Further, the central axis (longitudinal axis) of the flexible pipe 20 extends in the longitudinal direction of the vehicle 100 and is disposed such that the downstream-side end is located below the upstream-side end, namely, such that the central axis is inclined downwardly from the upstream-side end to the downstream-side end, and an inclined angle of the central axis is set to be larger than an inclined angle of the downstream-side portion 34 of the exhaust purification device 18.

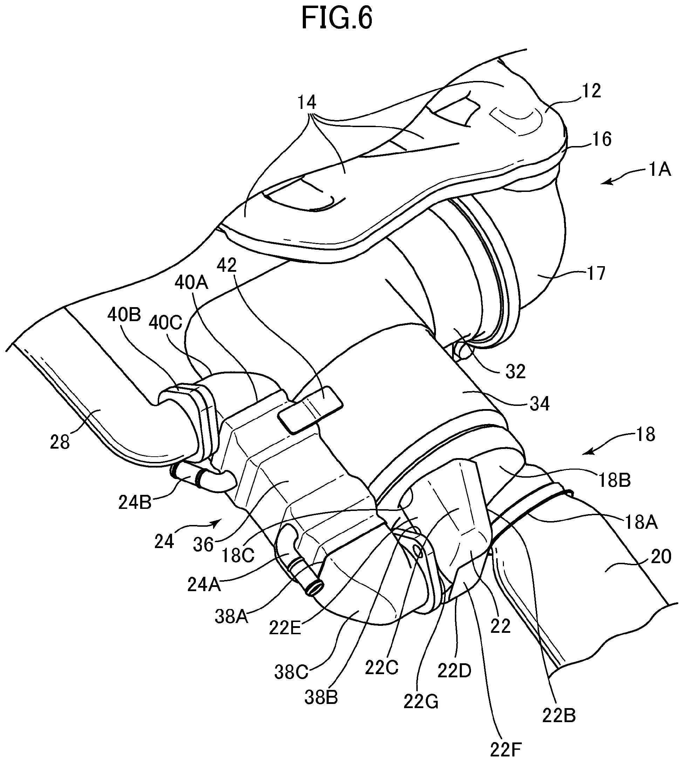

Figure 6 is an enlarged perspective view showing a part of the exhaust system device 1A for the vehicle according to the first embodiment of the present invention. As shown in this Figure 6 and aforementioned Figures 1 to 5, the EGR gas leading part 22 is a tubular member coupled to an EGR gas outlet 18C formed at the downstream end of the downstream-side portion 34 of the exhaust purification device 18. The EGR gas leading part 22 is coupled to the EGR gas outlet 18C disposed at a position on the left side in the vehicle-width direction and the upper side in the vertical direction on the circular end surface 18B at the downstream end of the downstream-side portion 34. With such a placement, a connection part between the EGR gas leading part 22 and the exhaust purification device 18 is located above a connection part between the flexible pipe 20 and the exhaust purification device 18 and on the left thereto in the vehicle-width direction.

The longitudinal axis of the EGR gas leading part 22 is disposed along the longitudinal direction of the vehicle 100, namely, along a gas flow direction of an exhaust gas flowing through the downstream-side portion 34 and substantially parallel to the central axis of the downstream-side portion 34, and the upstream end 22A of the EGR gas leading part 22 is open to the surface intersecting with the axis parallel to the central axis of the downstream-side portion 34, which is the surface substantially orthogonal to the central axis of the downstream-side portion 34 in the present embodiment.

The EGR gas leading part 22 is formed in a substantially rectangular cross-section shape and tapered toward the downstream. Specifically, the EGR gas leading part 22 has a right side surface 22B, an upper surface 22C, a lower surface 22D, a left side surface 22E, and a downstream end surface 22F, the right side surface 22B is an inclined surface inclined to the left in the vehicle-width direction toward the downstream, the upper surface 22C is an inclined surface inclined downwardly toward the downstream and the lower surface 22D is an inclined surface inclined upward as going downstream. However, the left side surface 22E has a flat surface parallel to the central axis of the downstream-side portion 34. Further, the downstream end surface 22F has a flat surface substantially orthogonal to the central axis of the downstream-side portion 34 of the exhaust purification device 18.

A downstream end 22G of the EGR gas leading part 22 is formed on the left side surface 22E, and hence an outlet (downstream end 22G) of the EGR gas leading part 22 is open to the left in the vehicle-width direction. The surface of the outlet of the EGR gas leading part 22, including the opening surface, is disposed so as to be in contact with the circumference of the downstream-side portion 34.

The first EGR cooler 24 is a water-cooling type EGR cooler and includes a first EGR cooler body 36, a first EGR gas flow-in part 38 formed at one upstream end of the first EGR cooler body 36, and a first EGR gas flow-out part 40 formed at the other downstream end of the first EGR cooler body 36.

The first EGR cooler body 36 is formed in a substantially rectangular parallelepiped, a longitudinal axis of the first EGR cooler body 36 is disposed substantially parallel to the central axis of the downstream-side portion 34 of the exhaust purification device 18, and one side surface of the first EGR cooler body 36 is disposed adjacent to the circumferential surface of the downstream-side portion 34.

A bracket 42 projecting from the side surface of the first EGR cooler body 36 toward the exhaust purification device 18 is provided on the upper surface of the first EGR cooler body 36, and by fixing this bracket 42 to the side surface of the downstream-side portion 34 of the exhaust purification device 18 by bolting, welding, or the like, the outer surface of the first EGR cooler 24 is fixed to the outer surface of the exhaust purification device 18. Hence the first EGR cooler 24 and the exhaust purification device 18 are fixed and fitted to each other in a place different from where the first EGR cooler 24 is connected to the exhaust purification device 18 via the EGR gas leading part 22.

The first EGR gas flow-in part 38 is located behind the first EGR cooler body 36 in the vehicle, is formed in a tubular shape, and is coupled integrally to the first EGR cooler body 36 at one end 38A on the first EGR cooler body 36 side. The other end of the first EGR gas flow-in part 38 is open to the right in the vehicle-width direction, namely, to the surface substantially orthogonal to the vehicle-width direction, to become a first EGR gas flow inlet 38B of the first EGR cooler 24. The first EGR gas flow inlet 38B is coupled to an outlet (downstream end 22G) of the EGR gas leading part 22, whereby the first EGR cooler 24 communicates with the EGR gas leading part 22. On a left side surface 38C of the first EGR gas flow-in part 38 in the vehicle-width direction, an inclined surface is formed which is inclined to the right toward the rear of the vehicle 100, namely, inclined to the gas flow inlet 38B (EGR gas leading part 22) side as going upstream of the first EGR gas flow-in part 38.

As thus described, the upstream end 22A of the EGR gas leading part 22 is open to the direction of the exhaust purification device 18 along the longitudinal direction of the vehicle 100, the downstream end 22G of the EGR gas leading part 22 is open to the left in the vehicle-width direction, the first EGR gas flow inlet 38A of the first EGR cooler 24 is open to the right, and the one end 38A is open to the direction along the longitudinal direction of the vehicle 100, whereby the direction of the path of the EGR gas leading from the EGR gas outlet 18A of the exhaust purification device 18 to the upstream end of the first EGR cooler body 36 is changed from the rear of the vehicle 100 to the left in the vehicle-width direction at the EGR gas leading part 22 and is then changed to the front at the first EGR gas flow-in part 38, and as a whole, the direction is rotated from the rear to the front by 180°. Further, the first EGR cooler 24 is disposed on the left to the downstream-side portion 34 of the exhaust purification device 18 in the vehicle-width direction, and whereby, the first EGR cooler 24 is adjacent to the side surface of the exhaust purification device 18 on the EGR valve 10 side of the intake passage 11 with respect to the vehicle-width direction.

The first EGR gas flow-out part 40 is located in front of the first EGR cooler body 36 in the vehicle, is formed in a tubular shape, and is coupled integrally to the first EGR cooler body 36 at one end 40A on the first EGR cooler body 36 side. The other end of the first EGR gas flow-out part 40 is open to the left in the vehicle-width direction, namely, to the surface substantially orthogonal to the vehicle-width direction, to become a first EGR gas flow outlet 40B of the first EGR cooler 24. The first EGR gas flow outlet 40B is coupled to one end of the first EGR pipe 28. On a right-side surface 40C of the first EGR gas flow-out part 40 in the vehicle-width direction, an inclined surface is formed which is inclined to the left toward the front of the vehicle 100, namely, inclined to the first EGR gas flow outlet 40B (first EGR pipe 28) side as going downstream of the first EGR gas flow-out part 40.

The first EGR cooler 24 with such a structure as described above is disposed as inclined downwardly toward the upstream side, namely, inclined downwardly toward the rear of the vehicle. Hence the first EGR gas flow outlet 40B of the first EGR cooler 24 is located above the first EGR gas flow inlet 38B. The inclined angle of the first EGR cooler 24 is larger than the inclined angle of the downstream-side portion 34 of the exhaust purification device 18 and is substantially the same as the inclined angle of the flexible pipe 20.

Further, in the side view, the first EGR cooler 24 is accommodated within a vertical dimension of the downstream-side portion 34 of the exhaust purification device 18, and in the side view, the first EGR cooler 24 does not project upward or downward from the exhaust purification device 18.

The second EGR cooler 26 is a water-cooling type EGR cooler, and includes a second EGR cooler body 46, a second EGR gas flow-in part 48 formed at one end of the second EGR cooler body 46 on the upstream side, and a second EGR gas flow-out part 50 formed at the other end of the second EGR cooler body 46 on the downstream side.

The second EGR cooler body 46 is formed in a substantially rectangular parallelepiped, a longitudinal axis of the second EGR cooler body 46 is disposed along the longitudinal direction of the vehicle 100, and one side surface of the second EGR cooler body 46 is disposed adjacent to the left surface of the cylinder block 4 of the engine 2.

Further, a bracket 52 projecting upward from the upper surface of the second EGR cooler body 46 or projecting downward from the lower surface thereof is provided on each of the upper surface and the lower surface of the second EGR cooler body 46, and by fixing this bracket 52 to the left side surface of the cylinder block 4 by bolting, welding, or the like, the outer surface of the second EGR cooler 26 is fixed and fitted to the outer surface of the cylinder block 4.

The second EGR gas flow-in part 48 is located behind the second EGR cooler body 46 in the vehicle, is formed in a tubular shape, and is coupled integrally to the second EGR cooler body 46 at one end 48A on the second EGR cooler body 46 side. The other end of the second EGR gas flow-in part 48 is open to the rear of the vehicle 100, to become a second EGR gas flow inlet 48B of the second EGR cooler 26. The second EGR gas flow inlet 48B is coupled to the other end of the first EGR pipe 28.

The second EGR gas flow-out part 50 is located in front of the second EGR cooler body 46 in the vehicle, is formed in a tubular shape, and is coupled integrally to the second EGR cooler body 46 at one end 50A on the second EGR cooler body 46 side. The other end of the second EGR gas flow-out part 50 is open to the front of the vehicle 100, to become a second EGR gas flow outlet 50B of the second EGR cooler 26. The second EGR gas flow outlet 50B is coupled to one end of the second EGR pipe 30.

The second EGR cooler 26 with such a structure as described above is disposed as inclined downwardly toward the upstream side, namely, inclined downwardly toward the rear of the vehicle. Hence the second EGR gas flow inlet 48B is disposed vertically below the second EGR gas flow outlet 50B in the vehicle vertical direction. The inclined angle of the second EGR cooler 26 is smaller than the inclined angle of the downstream-side portion 34 of the exhaust purification device 18. Further, the second EGR gas flow inlet 48B is disposed above the first EGR gas flow outlet 40B of the first EGR cooler 24 and on the left thereto in the vehicle-width direction. With such a placement, the second EGR cooler 26 is located above the exhaust purification device 18 and the first EGR cooler 24 and on the left thereto in the vehicle-width direction.

Note that the first EGR cooler 24 and the second EGR cooler 26 are the water-cooling types and are thus provided with cooling water inlets 24A, 26A and cooling water outlets 24B, 26B, respectively. The cooling water outlet 24B of the first EGR cooler 24 communicates with the cooling water inlet 26A of the second EGR cooler 26, and hence cooling-water circuits of the first EGR cooler 24 and the second EGR cooler 26 are coupled in series. Cooling water passing through the first EGR cooler 24 and the second EGR cooler 26 and come out of the cooling water outlet 26B cools each part of the engines, such as the cylinder head and the cylinder block wall surface, while being cooled by a radiator as needed, and returns to the cooling-water inlet 24A of the first EGR cooler 24.

The first EGR pipe 28 is a tubular member communicating the first EGR gas flow-out part 40 of the first EGR cooler 24 with the second EGR gas flow-in part 48 of the second EGR cooler 26 and is formed of a rubber hose in the present embodiment. The first EGR pipe 28 is coupled to the first EGR gas flow-out part 40 along the vehicle-width direction, extends while being bent upward and to the front of the vehicle 100, and is coupled to the second EGR gas flow-in part 48 along the direction to the front of the vehicle 100.

The second EGR pipe 30 is a tubular member communicating the second EGR gas flow-out part 50 of the second EGR cooler 26 with the intake passage 11. The second EGR pipe 30 extends along the direction to the front of the vehicle 100, extends while being bent upward on the lower side of the intake passage 11, and is coupled to the EGR valve 10 from below.

In the present embodiment, there is formed an EGR gas passage including the first EGR cooler 24, the second EGR cooler 26, the first EGR pipe 28, and the second EGR pipe 30, for supplying a part of an exhaust gas, taken out of the exhaust purification device 18, to the intake side as an EGR gas.

Here, the placement of the exhaust system device 1A with respect to the vehicle 100 will be described.

As shown in Figures 2 to 4, the engine 2 and the exhaust system device 1A are disposed in the engine room 102 of the vehicle 100, and a vehicle interior 104 is formed behind the engine room 102. The engine room 102 and the vehicle interior 104 are partitioned by a dash panel 106. The dash panel 106 includes a lower dash panel 108 disposed in a lower part of the vehicle interior 104, and an upper lower dash panel 110 coupled to the front end of the lower dash panel 108 and extending to the front part of the vehicle interior 104 in the vehicle-width direction.

A floor tunnel 112 extending in the longitudinal direction of the vehicle 100 and projecting to the vehicle interior 104 side is formed in the lower dash panel 108 and the upper lower dash panel 110. A floor tunnel region 114 is a lower-side region of the floor tunnel 112, which is surrounded by a projecting portion of the floor tunnel 112 and open downward and includes in its front-end portion a tunnel extension region 116 having cross-sectional area which increases toward the front of the vehicle 100. In the tunnel extension region 116, as shown in Figures 1 and 4, the width of the floor tunnel region 114 in the vehicle-width direction gradually increases as viewed from the vertical direction of the vehicle 100, and this increase in the width stops at a front end 110A projecting to the frontmost end side of the upper lower dash panel 110 on each side of the floor tunnel region 114 in the vehicle-width direction. Therefore, in the present embodiment, the front end of the tunnel extension region 116 is located on a vertical plane P passing through the front end 110A of the upper lower dash panel 110. As thus described, the tunnel extension region 116 means a region to a position where the width of the floor tunnel region 114 in the vehicle-width direction stops increasing, and the floor tunnel region 114 includes the tunnel extension region 116.

Moreover, as shown in Figures 2 and 3, in the side view of the vehicle 100, the upper surface and the lower surface of the floor tunnel region 114 are inclined upwardly toward the front. Figures 2 and 3 also show the plane P being the front end of the tunnel extension region 116. In the side view of the vehicle 100, a position Q where the plane P at the front end of the tunnel extension region 116 intersects with a line L extending from the upper end of the floor tunnel 112 is the upper end of the tunnel extension region 116. Further, as viewed from the front of the vehicle 100, the border of the tunnel extension region 116 in the vehicle-width direction is located at the front end 110A of the upper lower dash panel 110.

In the exhaust system device 1A for the vehicle of the present embodiment, the center of the engine 2 in the width direction is located to the right of the center of the floor tunnel region 114 in the width direction. The exhaust purification device 18, the flexible pipe 20, the EGR gas leading part 22, the first EGR cooler 24, and the second EGR cooler 26 are disposed at positions overlapping the floor tunnel region 114, as viewed from the front of the vehicle 100. The exhaust purification device 18, a part of the flexible pipe 20, the EGR gas leading part 22, and the first EGR cooler 24 are also disposed at positions overlapping a region other than the tunnel extension region 116 in the floor tunnel region 114, as viewed from the front of the vehicle 100.

Moreover, as shown in Figures 1 to 4, the vehicle-rear-side portions of the exhaust purification device 18 and the first EGR cooler 24 are disposed within the floor tunnel region 114. More specifically, a part of the downstream-side end of the exhaust purification device 18, most of the EGR gas leading part 22, most of the first EGR gas flow-in part 38 of the first EGR cooler 24, and most of the flexible pipe 20 are disposed within the tunnel extension region 116 which is the vehicle-front-side end of the floor tunnel region 114. Therefore, the downstream-side end of the exhaust purification device 18, the EGR gas leading part 22, the first EGR gas flow-in part 38, and the flexible pipe 20 are disposed so as to overlap the floor tunnel region 114 as viewed from the vertical direction and the lateral side of the vehicle 100.

The exhaust system device 1A for the vehicle with such a structure acts as follows.

First, an exhaust gas discharged from the engine 2 passes through the discharge pipe 14 of the exhaust manifold 12, merges into the mixing tube 16, flows downward, and flows into the exhaust purification device introduction passage 17. The exhaust gas flown into the exhaust purification device introduction passage 17 changes its direction from the below to the left in the vehicle-width direction and enters the exhaust purification device 18. In the exhaust purification device 18, the exhaust gas passes to the left through the catalyst device of the upstream-side portion 32, passes to the rear of the vehicle 100 through the GPF of the downstream-side portion 34, and is purified. Apart of the exhaust gas after the passage through the downstream-side portion 34 comes out of the exhaust outlet 18A, passes through the flexible pipe 20, and is then discharged out of the vehicle through a muffler or the like (not shown).

Meanwhile, the remaining part of the exhaust gas after the passage through the downstream-side portion 34 flows as the EGR gas from the EGR gas outlet 18C into the EGR gas leading part 22 toward the rear of the vehicle 100. The EGR gas changes the gas flow direction to the left in the vehicle-width direction while being guided to the right side surface 22B, the upper surface 22C, and the lower surface 22D of the EGR gas leading part 22, and changes the gas flow direction to the front while being guided to the left side surface 38C of the first EGR gas flow-in part 38 of the first EGR cooler 24, to rotate the gas flow direction by 180°.

The EGR gas flowing toward the front of the vehicle 100 enters the first EGR cooler body 36 from the first EGR gas flow-in part 38 to be cooled and comes out of the first EGR gas flow-out part 40 into first EGR pipe 28 while changing the gas flow to the left in the vehicle-width direction. The EGR gas passing through the first EGR pipe 28 flows into the second EGR cooler 26 toward the front of the vehicle 100, is further cooled by the second EGR cooler 26, enters the second EGR pipe 30 from the second EGR cooler 26 toward the front of the vehicle 100, and flows into the intake passage 11 via the EGR valve 10.

The exhaust system device 1A for the vehicle with such a structure achieves effects as described below.

Since the supercharger 9 is provided in the intake and exhaust device 1 of the engine 2, the lean-burn can be performed to leave oxygen required for the GPF of the exhaust purification device 18 in the exhaust gas, and hence the exhaust gas is favorably purified in the GPF. Further, by the supercharger 9 performing the supercharging, it is possible to ensure an amount of air required for the compression self-ignition. Moreover, the intake flow in the furnace increases due to the supercharging, thereby enabling acceleration of burning. It is thus possible to suppress generation of a deposit.

The exhaust purification device 18 is adjacent to the outer surface of the engine 2 and therefore, disposed near the engine 2. Hence the exhaust gas discharged from the engine 2 passes through a shorter path and is instantly introduced into the exhaust purification device 18, therefore, the temperature of the exhaust gas is less likely to decrease and the exhaust gas with a relatively high temperature can be introduced into the exhaust purification device 18. Therefore, even when an exhaust gas which is generated in the case of burning by compression self-ignition has a relatively low temperature, it is possible to avoid introduction of the exhaust gas in excessively low temperature into the exhaust purification device 18, and it is thus possible to favorably purify the exhaust gas in the catalyst device of the exhaust purification device 18.

For example, in the vehicle engine using both the compression self-ignition operation and the spark ignition operation, it was conventionally difficult to set the activation temperature range for the catalyst device of the exhaust purification device 18 due to a wide temperature range conceivable for the exhaust gas. In the present embodiment, the exhaust purification device 18 is disposed adjacent to the outer surface of the engine 2, therefore, it is possible to reduce the decrease in temperature of the exhaust gas and prevent the temperature of the exhaust gas from deviating from the activation temperature range for the catalyst device. This facilitates the setting of the activation temperature range for the catalyst device.

Since the supercharger 9 is driven by the force of burning of the engine 2, it is possible to prevent the supercharger from taking the energy out of the exhaust gas as compared to the case of using a supercharger driven by the force of the exhaust gas, such as a turbo charger. It is thus possible to prevent the decrease in temperature of the exhaust gas before the exhaust gas reaches the exhaust purification device 18, which also enables the supply of an exhaust gas with a relatively high temperature to the exhaust purification device 18, leading to favorable purification of the exhaust gas.

Since the exhaust system device 1A is disposed on the vehicle-rear side of the engine 2, the exhaust purification device 18 of the exhaust system device 1A is hidden behind the engine 2 when the vehicle 100 travels, and it is thus possible to prevent the exhaust purification device 18 from being overcooled by the wind generated by traveling. Hence a favorable activation environment for the catalyst device of the exhaust purification device 18 can be ensured.

Further, with the intake system device being disposed on the vehicle-front side of the engine 2 and the supercharger 9 being also disposed on the vehicle-front side, the intake system device including the supercharger 9 is collectively disposed on the vehicle-front side of the engine 2. This can lead to improvement in response to the supercharging.

Since the EGR gas leading part 22 is disposed downstream of the GPF of the exhaust purification device 18 and the EGR gas leading part 22 is connected to the upstream of the supercharger 9 via the EGR gas passage including the first and second EGR coolers 24, 26 and the first and second EGR pipes 28, 30, an exhaust gas with its deposit reduced by the GPF can be supplied to the upstream of the supercharger 9, thereby suppressing adhesion of the deposit component to the inside of the supercharger 9. It is thereby possible to suppress deterioration in supercharging efficiency of the supercharger 9.

The first EGR cooler 24 is made adjacent to the exhaust purification device 18 and the outer surface of the first EGR cooler 24 is fitted to the outer surface of the downstream-side portion 34 of the exhaust purification device 18 with the bracket 42 such that the gas flow direction of the first EGR cooler 24 is opposite to the gas flow direction of the downstream-side portion 34 of the exhaust purification device 18 and that the central axis of the first EGR cooler 24 is disposed along the longitudinal direction of the vehicle 100, thereby eliminating the need to fit the first EGR cooler 24 to the cylinder block 6 of the engine 4 as in the conventional case. It is thus possible to enhance the flexibility in placement of the first EGR cooler 24. Further, since the outer surface of the first EGR cooler 24 is fixed to the outer surface of the downstream-side portion 34 of the exhaust purification device 18 with the bracket 42, the first EGR cooler 24 and the exhaust purification device 18 operate as one rigid body, which can suppress generation of resonance between the first EGR cooler 24 and the exhaust purification device 18.

The EGR gas leading part 22 is disposed behind the downstream-side portion 34 of the exhaust purification device 18 in the vehicle 100 and is disposed on the downstream side of the gas flow direction of the exhaust gas in the downstream-side portion 34, therefore, the exhaust gas flowing through the downstream-side portion 34 flows into the EGR gas leading part 22 without changing its direction. This can facilitate taking the EGR gas out of the exhaust purification device 18. Therefore, for example, when the engine 2 is being operated in a low-revolution low-load range, the flow rate of the exhaust gas becomes small, but even in such a case, a required flow rate of the exhaust gas can be ensured.

Since the EGR gas leading part 22 is disposed downstream of the exhaust purification device 18, it is possible to take an exhaust gas passing through the exhaust purification device 18 and thus in an even lower temperature state as the EGR gas, therefore it is possible to supply the EGR gas with an even lower temperature to the engine 2.

Since the second EGR gas flow outlet 50B of the second EGR cooler 26 is located above the second EGR gas flow inlet 48B, when condensed water is generated in the second EGR cooler 26, the condensed water flows upstream from the second EGR gas flow outlet 50B side to the second EGR gas flow inlet 48B side. Further, since the second EGR gas flow inlet 48B is located above the first EGR gas flow outlet 40B of the first EGR cooler 24, the condensed water flows upstream to the first EGR cooler 24.

Moreover, since the first EGR gas flow inlet 38B of the first EGR cooler 24 is located below the first EGR gas flow outlet 40B, the condensed water flowing from the second EGR cooler 26 and condensed water generated in the first EGR cooler 24 flow upstream from the first EGR gas flow outlet 40B side to the first EGR gas flow inlet 38B side. Since the first EGR gas flow inlet 38B is located above the exhaust outlet 18A of the exhaust purification device 18, the condensed water flows toward the exhaust outlet 18A of the exhaust purification device 18. As the exhaust outlet 18A is connected to the flexible pipe 20, the condensed water is discharged to the outside through the flexible pipe 20.

With such a structure as described above, the condensed water generated in the first EGR cooler 24 and the second EGR cooler 26 can be discharged to the outside, thereby preventing suction of the condensed water to the engine 2 side. Hence it is possible to prevent water hammer which may occur due to suction of condensed water. In addition, it is possible to prevent accumulation of condensed water in the first EGR cooler 24, the second EGR cooler 26, and the first and second EGR pipes 28, 30, and to prevent corrosion of these parts.

With respect to the exhaust purification device 18 disposed on the rear of the engine 2, the first EGR cooler 24 is disposed adjacent to the left-side side surface of the exhaust purification device 18 in the vehicle-width direction, the first EGR pipe 28, the second EGR cooler 26, and the second EGR pipe 30 are disposed along the left-side side surface of the engine 2 in the vehicle-width direction, and the second EGR gas passage 30 communicates with the intake passage 11 at the position of the EGR valve 10 on the front left side of the engine 2. Therefore, the EGR gas path leading from the exhaust purification device 18 to the intake passage 11 through the first and second EGR coolers 24, 26 can be disposed on the left side of the engine 2 in the vehicle-width direction where the EGR valve 10 is disposed. It is therefore possible to make the EGR gas path short and the response of the EGR control favorable. Especially in the present embodiment, since the longitudinal axis of the downstream-side portion 34 of the exhaust purification device 18 is disposed on the left to the engine 2 in the vehicle-width direction, by disposing the EGR gas path which includes the first EGR cooler 24 and the second EGR cooler 26 along the left side of the engine 2 in the vehicle-width direction, the EGR gas path can be made even shorter.

Since the rear side ends of the exhaust purification device 18 and the first EGR cooler 24 overlap the floor tunnel region 114 as viewed from below and the side of the vehicle 100, even when the engine 2 and parts connected thereto move rearward at the time of collision of the vehicle 100, the exhaust purification device 18 and the first EGR cooler 24 are accommodated in the floor tunnel region 144. It is therefore possible to ensure the safety of vehicle passengers at the time of collision of the vehicle 100 and to prevent damage on the exhaust purification device 18 and the first EGR cooler 24. Further, with this placement, it is possible to dispose the exhaust purification device 18 and the first EGR cooler 24 such that the longitudinal axis follows the longitudinal direction of the vehicle 100 on the rear of the engine 2, while ensuring the safety of the vehicle passengers. Thus, the exhaust purification device 18 and the first EGR cooler 24 can also be disposed along the longitudinal direction as well as being disposed along the vehicle-width direction, thereby enhancing the flexibility in the placement direction of the exhaust purification device 18 and the first EGR cooler 24.

With the second EGR cooler 26 being provided downstream of the first EGR cooler 24, it is possible to ensure the required cooling capacity while suppressing increases in size of the first EGR cooler 24 and the second EGR cooler 26. Since the increase in size of the first EGR cooler 24 can be suppressed, it is possible to suppress the resonance between the first EGR cooler 24 and the exhaust purification device 18 to which the first EGR cooler 24 is fitted.

Since the first EGR pipe 28 is made up of the rubber hose, the vibrations of the first EGR cooler 24 and the second EGR cooler 26 can be absorbed. This enables suppression of the resonance between the first EGR cooler 24 and the second EGR cooler 26.

### [Second Embodiment]

Next, a second embodiment of the present invention will be described. In the second embodiment, the turbo supercharger 62 is disposed behind the engine 2, and the EGR gas path leading from the exhaust purification device 18 to the intake passage is different as compared to that in the first embodiment.

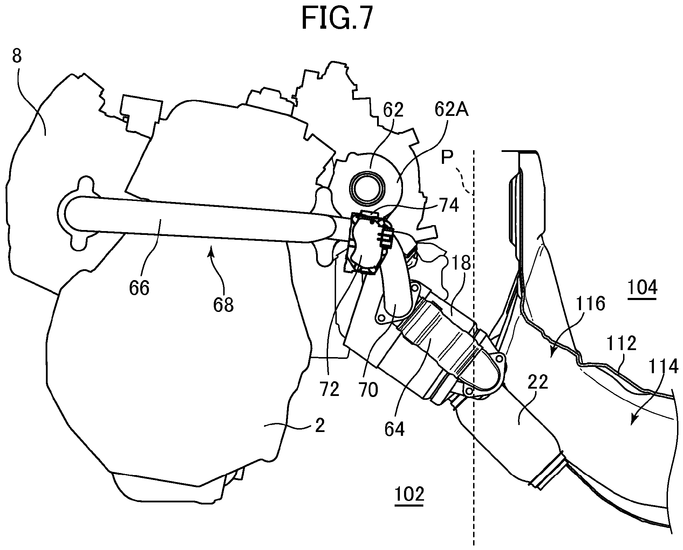

Figure 7 is a side view of an intake and exhaust device 60 for a vehicle according to a second embodiment of the present invention. As shown in this Figure 7, the turbo supercharger 62 is disposed behind the engine 2 and to the left of the center of the engine 2 in the vehicle-width direction. The turbo supercharger 62 includes a turbine (not shown) disposed on the right side and a compressor 62A disposed on the left side. The turbine is connected to the exhaust manifold 12, and the compressor 62A includes a compressor downstream passage 66 on the downstream side. The compressor downstream passage 66 has one end connected to the compressor 62A of the turbo supercharger 62, extends to the left end of the engine 2 in the vehicle-width direction along the vehicle-width direction behind the engine 2, extends so as to be inclined downwardly toward the front side along the left-side side surface of the engine 2 in the vehicle-width direction, and is connected to the intake manifold 8 on the front side of the engine 2. In the present embodiment, the passage from the compressor 62A of the turbo supercharger 62 to the intake manifold 8 through the compressor downstream passage 66 is an intake passage 68.

The exhaust purification device 18 is connected to the downstream side of the turbine. The upstream-side end (exhaust gas inlet) of the exhaust purification device 18 is disposed below the exhaust outlet of the turbo supercharger 62. The EGR gas leading part 22 and an EGR cooler 64 are connected to the downstream side of the exhaust purification device 18. The structure of the EGR cooler 64 is the same as that of the first EGR cooler 24 of the first embodiment, and hence its description will be omitted here. The EGR cooler 64 is adjacent to the left side of the exhaust purification device 18 in the vehicle-width direction and has the outer surface fitted to the outer surface of the exhaust purification device 18 with a bracket (not shown) as in the first embodiment. The exhaust purification device 18 and the EGR cooler 64 are inclined downwardly toward the rear of the vehicle 100 as in the first embodiment.

One end of an EGR cooler downstream passage 70 is connected to an EGR gas flow outlet 64A which is the downstream-side end of the EGR cooler 64. The EGR cooler downstream passage 70 extends so as to be inclined rearwardly along the longitudinal direction of the vehicle 100 on the left sides of the exhaust purification device 18 and the turbo supercharger 64 in the vehicle-width direction. The other end of the EGR cooler downstream passage 70 is connected to a portion of the compressor downstream passage 66 which extends in the vehicle-width direction behind the engine 2. An EGR valve 72 is provided in the middle of the EGR cooler downstream passage 70, and the EGR valve 72 is fixed to the turbo supercharger 62 with a bracket 74.

In an exhaust system device 60A with such a structure as in the first embodiment, a part of the exhaust gas coming out of the exhaust purification device 18 is taken out as the EGR gas by the EGR gas leading part 22 and cooled by the EGR cooler 64, and thereafter, the EGR gas is supplied to the compressor downstream passage 66 of the intake passage 68 through the EGR cooler downstream passage 70.

The exhaust system device 60A of the second embodiment with such a structure as above achieves effects as follows other than similar effects to those in the first embodiment.

In the structure where the turbo supercharger 62 is provided behind the engine 2 and the compressor downstream passage 66 is provided on the left side of the turbo supercharger 62 in the vehicle-width direction, the EGR cooler 64 is fitted to the left-side side surface of exhaust purification device 18 in the vehicle-width direction while being adjacent thereto, and the EGR cooler downstream passage 70 is also disposed on the left side of the exhaust purification device 18 in the vehicle-width direction. The EGR cooler downstream passage 70 is then connected to the portion of the compressor downstream passage 66 which extends along the vehicle-width direction behind the engine 2. With such a structure, both the EGR cooler 64 and the EGR cooler downstream passage 70 are provided on the left side of the turbo supercharger 62 in the vehicle-width direction where the compressor downstream passage 66 is provided, namely, on the left side of the exhaust purification device 18 in the vehicle-width direction, therefore, the EGR gas path leading from the exhaust purification device 18 to the compressor downstream passage 66 can be made short and the response of the EGR control can be made favorable.

Further, by combination with the supercharger 9 shown in the first embodiment, the supercharger 9 is driven at the time of the compression self-ignition operation, and the turbo supercharger 62 is used to perform the supercharging at the time of the spark ignition operation, whereby the temperature of the exhaust gas is prevented from deviating from the activation temperature range for the catalyst device at the time of the compression self-ignition operation, and the exhaust gas energy is consumed by the drive of the turbo supercharger at the time of the spark ignition operation, especially at the time of a high-load operation, so that it is possible to prevent the temperature of the exhaust gas from deviating from the activation temperature range for the catalyst device.

### [Third Embodiment]

Next, an intake and exhaust device 80 for a vehicle engine according to a third embodiment of the present invention will be described. In the third embodiment, a description will be given for a structure in which an exhaust purification device 82 of the intake and exhaust device 80 for the vehicle engine according to the first embodiment is fixed to the engine 2. Further, the intake and exhaust device 80 according to the third embodiment is different from the intake and exhaust device 1 of the first embodiment in the configuration of the EGR gas path leading from the exhaust purification device 82 to the intake passage.

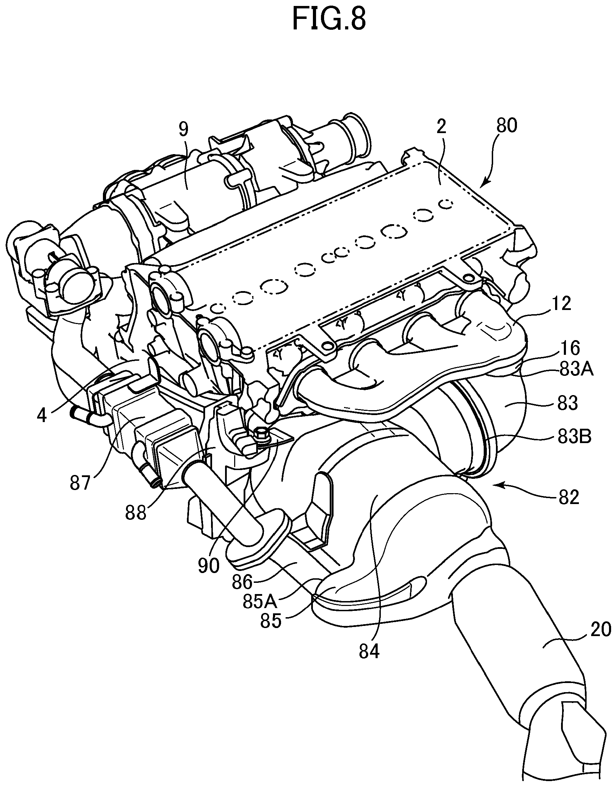

Figure 8 is a perspective view of the intake and exhaust device 80 for the vehicle engine according to the third embodiment of the present invention. As shown in this Figure 8, the exhaust purification device 82 of the intake and exhaust device 80 for the vehicle engine according to the third embodiment of the present invention is connected to the exhaust manifold 12 via an exhaust purification device introduction passage 83 in the same manner as the exhaust purification device 18 of the first embodiment. In the present embodiment, as shown in Figure 8, the exhaust purification device introduction passage 83 has a smaller dimension in the vehicle-width direction than the exhaust purification device introduction passage 83 of the first embodiment and has a substantially disk-like flat shape. A gas inlet 83A connected to the mixing tube 16 of the exhaust manifold 12 is formed at the upper end of the exhaust purification device introduction passage 83, and a gas outlet 83B for connection to the exhaust purification device 82 is formed on the left side of the exhaust purification device introduction passage 83 in the vehicle-width direction.

The GPF is disposed in a downstream-side portion 84 of the exhaust purification device 82, and this downstream-side portion 84 is a weight part which accounts for most of the weight of the entire exhaust purification device 82. The downstream-side portion 84 extends along the longitudinal direction of the vehicle 100 as in the first embodiment. That is, the downstream-side portion 84 extends in the direction away from the outer surface of the engine 2.

A radially projecting EGR leading part 85 is provided at the downstream end (rear end) of the downstream-side portion 84 of the exhaust purification device 82. An outlet (downstream end) 85A of the EGR leading part 85 is open to the front of the vehicle 100. An EGR pipe 86 is connected to the outlet 85A, and this EGR pipe 86 extends along the longitudinal direction of the vehicle 100 and has a downstream end connected to an EGR cooler 87. In the present embodiment, only one EGR cooler 87 is provided, and this EGR cooler 87 is fixed to the side surface of the cylinder block 4 of the engine 2. Further, the EGR cooler 87 has an upstream-side end connected to the EGR pipe 86 and a downstream-side end connected to the intake passage. In the present embodiment, the EGR gas passage is formed including the EGR pipe 86 and the EGR cooler 87.

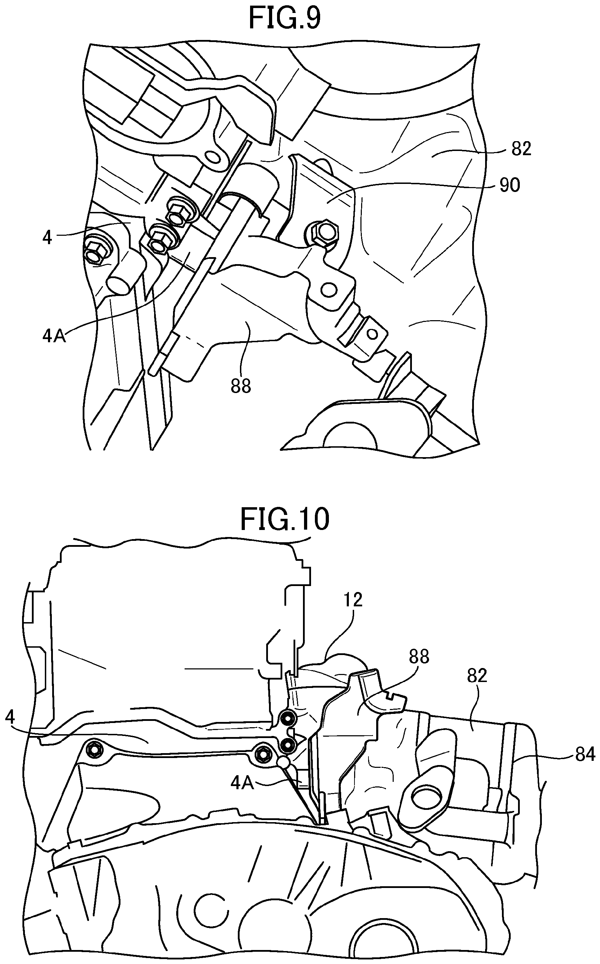

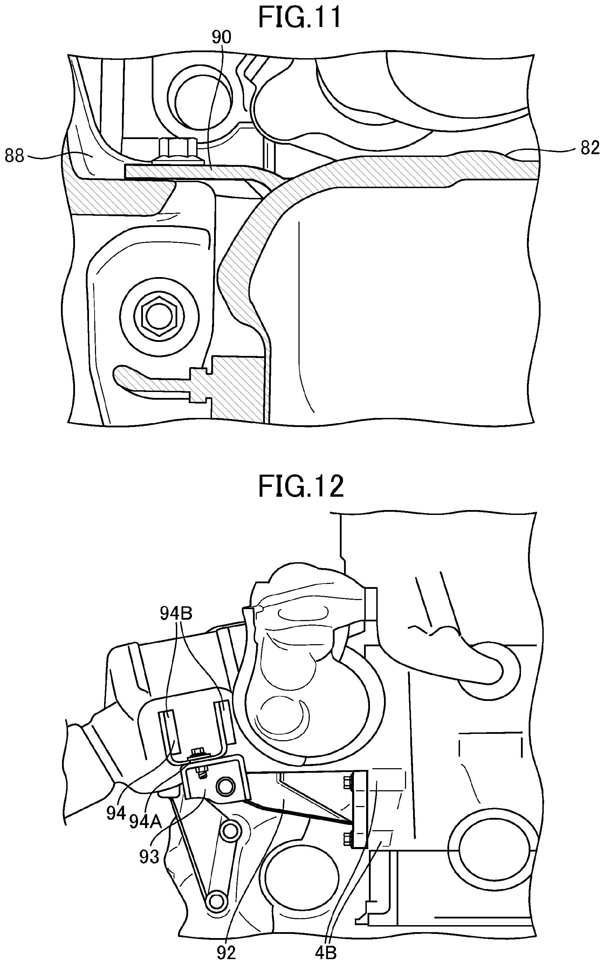

Figure 9 is a partial enlarged perspective view showing the installation structure of the exhaust purification device 82 according to the third embodiment of the present invention, Figure 10 is a side view of the intake and exhaust device 80 for the vehicle engine according to the third embodiment of the present invention, and Figure 11 is a partial enlarged sectional view showing the installation structure of the exhaust purification device 82 according to the third embodiment of the present invention.

Referring to aforementioned Figure 8 and Figures 9 to 11, the exhaust purification device 82 is fixed to outer surface of the engine 2 at the end of the downstream-side portion 84 on the engine side, namely, at the end thereof on the front side of the vehicle. More specifically, as shown in Figures 9 and 10, a boss 4A is formed on the outer surface of the cylinder block 4 of the engine 2, the boss 4A projecting rearwardly from the rear-side outer surface, and a first engine-side support bracket 88 is fastened to this boss 4A with a bolt. The first engine-side support bracket 88 is a plate-like member extending along the longitudinal direction and the vertical direction of the vehicle 100 and has a smaller dimension in the vehicle-width direction than in the longitudinal direction or the vertical direction.

Meanwhile, a first purifying device-side support bracket 90 connected to the first engine-side support bracket 88 is provided at the end, on the left side in the vehicle-width direction and front side of the vehicle, of the downstream-side portion 84 of the exhaust purification device 82. As illustrated in Figure 11, the first purifying device-side support bracket 90 is fixed to a container of the exhaust purification device 82 by brazing, and projects from the outer surface of the upper part of the exhaust purification device 82 toward the left side in the vehicle-width direction. As illustrated in Figure 11, the first purifying device-side support bracket 90 extends slightly upward on the base end side fixed to the outer surface of the exhaust purification device 82 and horizontally extends on the tip side. The first purifying device-side support bracket 90 is bolted to the first engine-side support bracket 88 on the tip side. Hence the exhaust purification device 82 is fixed to the outer surface of the engine 2.

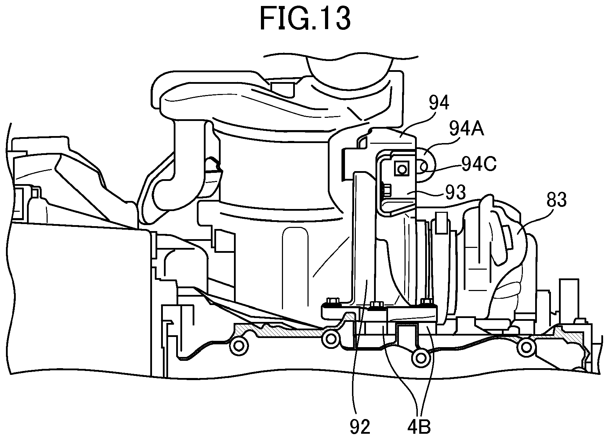

Figure 12 is a side view showing the installation structure of the exhaust purification device according to the third embodiment of the present invention. Figure 13 is a bottom view showing the installation structure of the exhaust purification device according to the third embodiment of the present invention. As shown in these Figures 12 and 13, the exhaust purification device 82 is fixed to the outer surface of the cylinder block 4 of the engine 2 also on the right-side side surface of the downstream-side portion 84 in the vehicle-width direction. More specifically, the cylinder block 4 is formed with a plurality of bosses 4B projecting rearwardly from the rear-side outer surface. A second engine-side support bracket 92 is fixed to these bosses 4B. The second engine-side support bracket 92 is a plate-like member extending along the longitudinal direction and the vertical direction of the vehicle 100 and has a smaller dimension in the vehicle-width direction than in the longitudinal direction or the vertical direction. Thus, the vertical rigidity of the second engine-side support bracket 92 is higher than the rigidity thereof in the vehicle-width direction. A substantially L-shaped link bracket 93 is fixed to the tip side of the second engine-side support bracket 92.

Meanwhile, a second purifying device-side support bracket 94 connected to the second engine-side support bracket 92 via a link bracket 93 is fitted to the right-side side surface of the downstream-side portion 84 of the exhaust purification device 82 in the vehicle-width direction. The second purifying device-side support bracket 94 is formed in a substantially U-shape, and the tips of two tip portions 94B extending both sides of a base end portion 94A are fixed to the side surface of the downstream-side portion 84 of the exhaust purification device 82. A long hole 94C with its longitudinal axis disposed along the vehicle-width direction is formed on the base end portion 94A of the second purifying device-side support bracket 94. The second purifying device-side support bracket 94 is fixed to the link bracket 93 through the long hole 94C with a bolt, to be supported by the second engine-side support bracket 92.

Here, the second purifying device-side support bracket 94 is located behind the first purifying device-side support bracket 90 in the vehicle 100. The second purifying device-side support bracket 94 is supported by the second engine-side support bracket 92 via the long hole 94C while being supported by the outer surface of the engine 2, and hence the exhaust purification device 92 is supported so as to be movable in the vehicle-width direction.

The intake and exhaust device 80 for the vehicle engine with such a structure as above operates as follows.

During the operations of the vehicle engine 2 and the intake and exhaust device 80, the downstream-side portion 84 of the exhaust purification device 82, which is the weight part, extends in the direction farther away from the outer surface of the engine 2 than the first purifying device-side support bracket 90, more specifically, extends along the longitudinal direction of the vehicle 100, therefore, the exhaust purification device 82 vibrates to function as a dynamic damper. This cancels out the vibration of the engine 2.

At the time of using the downstream-side portion 84 as the dynamic damper, the exhaust purification device introduction passage 83 functions as a spring of the dynamic damper. Further, the support part formed by the first engine-side support bracket 88 and the first purification device-side support bracket functions as a part for adjusting a spring constant of the dynamic damper while allowing horizontal variation of the downstream-side portion 84. Meanwhile, the support part formed by the second engine-side support bracket 92, the link bracket 93, and the second purifying device-side support bracket 94 functions so as to suppress vertical vibration of the downstream-side portion 84 while allowing horizontal vibration thereof.

The intake and exhaust device 80 for the vehicle engine with such a structure achieves effects as follows.

The exhaust purification device 82 is supported on the outer surface of the engine 2 by the first engine-side support bracket 88 and the first purifying device-side support bracket 90 and the downstream-side portion 84 being the weight part of the exhaust purification device 82 is disposed extending behind in the direction away from the outer surface of the engine 2 than the position supported by these support brackets 88, 90, therefore, the exhaust purification device 82 vibrates to function as the dynamic damper during the operation of the engine 2. As a result, it is possible to cancel out the vibration of the engine 2 by the vibration of the exhaust purification device 82, and reduce the vibration and noise of the vehicle 100.

The present invention is not limited to the above embodiments and may, for example, be in such a form as follows.

The longitudinal axis of the first EGR cooler 24 or the EGR cooler 64 may be substantially parallel to the central axis of the downstream-side portion 34 of the exhaust purification device. For example, in the side view of the vehicle, the longitudinal axis of the EGR cooler and the central axis of the downstream-side end of the exhaust purification device may not necessarily match or be parallel to each other but may intersect with each other. In short, the longitudinal axis of the EGR cooler may be disposed along the longitudinal direction of the vehicle.

In the above embodiments, both the first EGR cooler 24 and the second EGR cooler 26 are of the water-cooling types, but this is not restrictive, and when two EGR coolers are provided in series, the upstream-side EGR cooler may be of an air-cooling type while the downstream-side EGR cooler may be of a water-cooling type. Employing the air-cooling type as the EGR cooler enables prevention of the increase in size of the EGR cooler as compared to the water-cooling type. Further, the EGR gas can be roughly cooled by the upstream-side air-cooling type EGR cooler and can then be reliably cooled down to a desired temperature by the downstream-side water-cooling type EGR cooler, thus enabling efficient cooling of the EGR gas.

Moreover, in the above embodiments, the cooling-water circuits of the first EGR cooler 24 and the second EGR cooler 26 are coupled in series, but this is not restrictive, and each of the first EGR cooler and the second EGR cooler may be provided on a different cooling-water circuit so as to have different cooling performance.

In the above embodiments, the engine performs the compression self-ignition operation, but the present invention is not restricted thereto, and it may be configured such that the spark ignition operation can be conducted concurrently with the compression self-ignition operation.

In the above embodiments, the engine performs lean-burn, but this is not restrictive, and any air fuel ratio for burning can be selected.

In the above embodiments, the supercharger has been used which is belt-driven by a force generated by burning of the engine, but this is not restrictive, and it is possible to employ any type of supercharger driven by a force other than the exhaust gas, such as an electric supercharger driven by electric power of a motor or the like.

In the above embodiments, in the exhaust purification device, the weight part, namely the GPF being the downstream-side portion 34 is disposed so as to extend along the longitudinal direction of the vehicle 100, but this is not restrictive, and for example, the exhaust purification device may be disposed so as to extend along the vertical direction of the vehicle.

### List of Reference Numerals

- 1, 60: intake and exhaust device
- 1A, 60A: exhaust system device
- 2: engine
- 11: intake passage
- 18: exhaust purification device
- 22: EGR gas leading part
- 24: first EGR cooler
- 26: second EGR cooler
- 28: first EGR pipe
- 30: second EGR pipe
- 32: upstream-side portion
- 34: downstream-side portion
- 100: vehicle

## Claims

1. A vehicle engine (2) which is capable to perform a compression self-ignition operation comprising an intake and exhaust device, an intake system being disposed on a vehicle-front side of the engine (2) and an exhaust system being disposed on a vehicle-rear side of the engine (2) when the engine (2) is mounted on a vehicle, the device comprising
an intake manifold (8) which is mounted on an intake side of the engine (2) and is integrated with a water cooling inter cooler,
a supercharger (9) driven by a force other than an exhaust gas which is disposed on the vehicle-front side of the engine (2), upstream side of the intake manifold (8) and above the intake manifold on an intake passage,
wherein an exhaust purification device (18) disposed on an exhaust passage is disposed adjacent to an outer surface of the engine (2).

2. The vehicle engine according to claim 1, wherein the supercharger (9) is a supercharger driven by an output shaft of the engine.

3. The vehicle engine according to claim 1, wherein the supercharger (9) is an electric supercharger.

4. The vehicle engine according to claim 2, wherein
the engine is capable to perform a spark ignition operation,
a turbo supercharger is provided upstream of the exhaust purification device (18) on the exhaust passage,
supercharging is performed by the turbo supercharger when the spark ignition operation is conducted, and
supercharging is performed by the supercharger when the compression self-ignition operation is conducted.

5. The vehicle engine according to claim 3, wherein
the engine is capable to perform a spark ignition operation,
a turbo supercharger (62) is provided upstream of the exhaust purification device (18) on the exhaust passage,
supercharging is performed by the turbo supercharger (62) when the spark ignition operation is conducted, and
supercharging is performed by the electric supercharger (9) when the compression self-ignition operation is conducted.

6. The vehicle engine according to any one of claims 1 to 5, wherein
the exhaust purification device (18) includes a particulate filter part and an exhaust gas recirculation (EGR) gas leading part provided downstream of the particulate filter part, and
the EGR gas leading part is connected to an upstream of the supercharger (9) via an EGR gas passage.

7. The vehicle engine according to any one of claims 1 to 6, wherein
the exhaust purification device (18) is supported on the outer surface of the engine (2) by a support part, and
a weight part of the exhaust purification device (18) is disposed extending in a direction away from the outer surface than the support part.

8. A vehicle comprising a vehicle engine according to any one of claims 1 to 7, wherein
the supercharger (9) is disposed on the vehicle-front side of the engine.

9. A vehicle comprising a vehicle engine according to claim 6, wherein the particulate filter part extends in a longitudinal direction of the vehicle, and
an outlet of the EGR gas leading part is open to the front of the vehicle.

## Patentansprüche

1. Fahrzeugmotor (2), der in der Lage ist, einen Kompressions-Selbstzündungsvorgang durchzuführen, welcher eine Ansaug- und Auslassvorrichtung aufweist, wobei an einer Fahrzeugvorderseite des Motors (2) ein Ansaugsystem angeordnet ist und an einer Fahrzeugrückseite des Motors (2) ein Auslasssystem angeordnet ist, wenn der Motor in einem Fahrzeug eingebaut ist, wobei die Vorrichtung aufweist:
einen Ansaugkrümmer (8), der an einer Ansaugseite des Motors (2) montiert ist und mit einem Wasser-Ladeluftkühler integriert ist,
einen Lader (9), der durch eine Kraft angetrieben wird, bei der es sich nicht um Abgas handelt, der an der Fahrzeugvorderseite des Motors (2) der Stromaufwärtsseite des Ansaugkrümmers (8) und oberhalb des Ansaugkrümmers an einer Ansaugpassage angeordnet ist,
wobei eine Abgasreinigungsvorrichtung (18), die an einer Auslasspassage angeordnet ist, benachbart einer Außenoberfläche des Motors (2) angeordnet ist.

2. Fahrzeugmotor nach Anspruch 1, wobei der Lader (9) ein Lader ist, der durch eine Abtriebswelle des Motors angetrieben wird.

3. Fahrzeugmotor nach Anspruch 1, wobei der Lader (9) ein elektrischer Lader ist.

4. Fahrzeugmotor nach Anspruch 2, wobei der Motor in der Lage ist, einen Funkenzündungsvorgang durchzuführen,
ein Turbolader stromaufwärts der Abgasreinigungsvorrichtung (18) an der Abgaspassage vorgesehen ist,
eine Aufladung durch den Turbolader durchgeführt wird, wenn der Funkenentladungsvorgang durchgeführt wird, und
eine Aufladung durch den Lader durchgeführt wird, wenn der Kompressions-Selbstzündungsvorgang durchgeführt wird.

5. Fahrzeugmotor nach Anspruch 3, wobei
der Motor in der Lage ist, einen Funkenzündungsvorgang durchzuführen,
ein Turbolader (62) stromaufwärts der Abgasreinigungsvorrichtung (18) an der Abgaspassage vorgesehen ist,
eine Aufladung von dem Turbolader (62) durchgeführt wird, wenn der Funkenzündungsvorgang durchgeführt wird, und
eine Aufladung von dem elektrischen Lader (9) durchgeführt wird, wenn der Kompressions-Selbstzündungsvorgang durchgeführt wird.

6. Fahrzeugmotor nach einem der Ansprüche 1 bis 5, wobei
die Abgasreinigungsvorrichtung (18) einen Partikelfilterteil und einen Gas-führenden Abgasrückführ(AGR)-teil aufweist, der stromaufwärts des Partikelfilterteils vorgesehen ist, und
der Gas-führende AGR-Teil über eine AGR-Passage mit einer Stromaufwärtsseite des Laders (9) verbunden ist.

7. Fahrzeugmotor nach einem der Ansprüche 1 bis 6, wobei
die Abgasreinigungsvorrichtung (18) durch ein Stützteil an der Außenoberfläche des Motors (2) gelagert wird, und
ein Gewichtsteil der Abgasreinigungsvorrichtung (18) derart angeordnet ist, dass es sich in einer Richtung weg von der Außenfläche denn das Stützteil erstreckt.

8. Fahrzeug, aufweisend einen Fahrzeugmotor nach einem der Ansprüche 1 bis 7, wobei der Lader (9) an der Fahrzeugvorderseite des Motors angeordnet ist.

9. Fahrzeug, aufweisend einen Fahrzeugmotor nach Anspruch 6, wobei sich der Partikelfilterteil in einer Längsrichtung des Fahrzeugs erstreckt, und
ein Auslass des Gas-führenden AGR-Teils zur Vorderseite des Fahrzeugs hin offen ist.

## Revendications

1. Moteur (2) de véhicule apte à effectuer un fonctionnement à auto-allumage par compression, comprenant un dispositif d'admission et d'échappement, un système d'admission étant disposé d'un côté, vers l'avant du véhicule, du moteur (2), et un système d'échappement étant disposé d'un côté, vers l'arrière du véhicule, du moteur (2), lorsque le moteur (2) est monté sur un véhicule, le dispositif comprenant :
un collecteur d'admission (8) monté d'un côté d'admission du moteur (2) et intégré à un refroidisseur intermédiaire de refroidissement par eau,
un compresseur à suralimentation (9) entraîné par une force autre qu'un gaz d'échappement, et disposé du côté, vers l'avant du véhicule, du moteur (2), du côté amont du collecteur d'admission (8) et au-dessus du collecteur d'admission sur un passage d'admission,
un dispositif (18) d'épuration des gaz d'échappement, disposé sur un passage d'échappement, étant disposé adjacent à une surface externe du moteur (2).

2. Le moteur de véhicule selon la revendication 1, dans lequel le compresseur à suralimentation (9) est un compresseur à suralimentation entraîné par un arbre de sortie du moteur.

3. Le moteur de véhicule selon la revendication 1, dans lequel le compresseur à suralimentation (9) est un compresseur à suralimentation électrique.

4. Le moteur de véhicule selon la revendication 2, dans lequel
le moteur est apte à effectuer un fonctionnement à allumage par étincelle,
un turbocompresseur à suralimentation est prévu en amont du dispositif (18) d'épuration des gaz d'échappement sur le passage d'échappement,
la suralimentation est effectuée par le turbocompresseur à suralimentation lors de la conduite du fonctionnement à allumage par étincelle, et
la suralimentation est effectuée par le compresseur à suralimentation lors de la conduite du fonctionnement à auto-allumage par compression.

5. Le moteur de véhicule selon la revendication 3, dans lequel
le moteur est apte à effectuer un fonctionnement à allumage par étincelle,
un turbocompresseur à suralimentation (62) est agencé en amont du dispositif (18) d'épuration des gaz d'échappement sur le passage d'échappement,
la suralimentation est effectué par le turbocompresseur à suralimentation (62) lors de la conduite du fonctionnement à allumage par étincelle, et
la suralimentation est effectué par le compresseur à suralimentation électrique (9) lors de la conduite du fonctionnement à auto-allumage par compression.

6. Le moteur de véhicule selon l'une quelconque des revendications 1 à 5, dans lequel
le dispositif (18) d'épuration des gaz d'échappement comprend une partie filtre à particules et une partie de guidage des gaz de recirculation des gaz d'échappement (RGE) prévue en aval de la partie filtre à particules, et
la partie de guidage des gaz RGE est reliée à une partie amont du compresseur à suralimentation (9) par l'intermédiaire d'un passage de gaz RGE.

7. Le moteur de véhicule selon l'une quelconque des revendications 1 à 6, dans lequel
le dispositif (18) d'épuration des gaz d'échappement est porté sur la surface externe du moteur (2) à l'aide d'une partie de support, et
une partie de poids du dispositif (18) d'épuration des gaz d'échappement est disposée pour s'étendre dans une direction s'éloignant de la surface externe par rapport à la partie de support.

8. Véhicule comprenant un moteur de véhicule selon l'une quelconque des revendications 1 à 7, dans lequel
le compresseur à suralimentation (9) est disposé du côté, vers l'avant du véhicule, du moteur.

9. Véhicule comprenant un moteur de véhicule selon la revendication 6, dans lequel la partie filtre à particules s'étend dans une direction longitudinale du véhicule, et
une sortie de la partie de guidage des gaz RGE est ouverte vers l'avant du véhicule.
